# EUROPÄISCHE PATENTSCHRIFT

(11) **EP 0 789 478 B1**
(45) Veröffentlichungstag und Bekanntmachung des Hinweises auf die Patenterteilung: **23.11.2005**
(21) Anmeldenummer: 96116654.3
(22) Anmeldetag: 17.10.1996
(51) Int. Cl.: H04M 19/08

(54) **Schaltungsanordnung zur dezentralen Stromversorgung mit geringem Ruhestrom**
Circuit arrangement for decentralised power feeding having low standby current
Circuit pour alimentation décentralisée avec faible courant de repos

(30) Priorität: 08.02.1996 DE 19604503
(43) Veröffentlichungstag der Anmeldung: 13.08.1997
(73) Patentinhaber: DeTeWe Systems GmbH, 10997 Berlin (DE)
(72) Erfinder: Neuhaus, Hans-Jürgen, 12161 Berlin (DE)

(56) Entgegenhaltungen:
- EP-A- 0 217 139
- DE-A- 2 939 008
- US-A- 4 410 766

## Beschreibung

Die Erfindung betrifft eine Schaltungsanordnung zur dezentralen Stromversorgung in Telekommunikationsanlagen zum Speisen analog und/oder digital gesteuerter Endgeräte über eine Teilnehmerschnittstelle.

Allgemein werden Endgeräte öffentlicher Telefonnetze ferngespeist über die Teilnehmeranschlussleitungen. In Telekommunikationsanlagen, z. B. Nebenstellenanlagen, übernimmt die Speisung eine von der Fernspeisung unabhängige Gleichspannungsquelle. Für eine solche Speisung sind verschiedene Verfahren vorgeschlagen worden (DE 33 11 386 C2, EP 339 201 B1). Alle diese Verfahren verwenden in der Regel zentrale, relativ aufwendige Teilnehmerspeiseschaltungen, die entsprechende Kühlmaßnahmen erfordern und oft auch im Ruhezustand des Endgerätes die bei Bedarf mögliche Absenkung der Energieeinspeisung nicht durchführen können.

Aus der DE 2 939 008 A ist eine Schaltungsanordnung für eine in einem elektronischen Vermittlungssystem mit zentraler Steuereinrichtung eingesetzte Teilnehmeranschlussschaltung mit einem Speiseglied bekannt, über das die Speisung der jeweils zugeordneten Teilnehmerstelle durch eine zentrale Speisespannungsquelle erfolgt. Der Betriebszustand der Teilnehmeranschlussleitung wird durch eine Indikatorschaltung erfasst, die mit den Leitungsadern gekoppelt ist und für die zur Unterscheidung der möglichen Betriebszustände ein Ansprechschwellwert vorgegeben ist. Das Ausgangssignal der Indikatorschaltung wird durch die zentrale Steuereinrichtung bewertet, wobei das Speiseglied sowohl einen hochohmigen als auch einen niederohmigen Schaltzustand im Speisestromkreis einnehmen kann.

Für jeden durch die zentrale Steuereinrichtung einstellbaren Schaltzustand des Speisegliedes ist die Indikatorschaltung auswertebereit geschaltet. Im Ruhezustand der Teilnehmeranschlussschaltungen nimmt das Speiseglied den hochohmigen Schaltzustand ein, während bei Anwahl der Teilnehmer oder bei einem durch die Indikatorschaltung erkannten Abheben des Handapparates der niederohmige Zustand durch Überbrücken von Reihenwiderständen mittels Relaiskontakte hergestellt wird. Weiterhin ist in diesem Schaltzustand durch die Steuereinrichtung ein Schwellwert für die Indikatorschaltung wirksam geschaltet, der gegenüber demjenigen, für den niederohmigen Schaltzustand maßgebenden Schwellwert bezogen auf die Spannungsänderungen an den Leitungsadern ein höheres Niveau aufweist.

Aus der US 4 410 766 A ist eine Schaltungsanordnung zur Speisung eines Telekommunikations-Endgerätes durch eine zweiadrige Kupferleitung mit zwei Spannungsstufen bekannt, bei der zum Schalten der beiden Spannungsstufen ein Transistorschalter eingesetzt wird. Zum Reduzieren der Übertragungsleistung bei kurzen Leitungslängen der Teilnehmerleitungen wird der Leitungsstrom im aktiven Zustand der Teilnehmerleitung erfasst und die Speisespannung herabgesetzt, wenn der Leitungsstrom einen vorbestimmten Schwellwert überschreitet. Befindet sich die Teilnehmeranschlussteitung im Ruhezustand, so wird die ursprüngliche Speisespannung wiederhergestellt.

Die beiden bekannten Schaltungsanordnungen für Teilnehmeranschlussschaltungen eines elektronischen Vermittlungssystems ermöglichen somit entweder die Erfassung des Betriebszustandes der Teilnehmeranschlussleitung in Verbindung mit einer Reduzierung des Speisestromes im Ruhezustand der Teilnehmeranschlussschaltung oder eine Reduzierung der Anschlussleistung bei kurzen Übertragungslängen, wenn der Teilnehmeranschluss aktiviert ist.

Von diesem Stand der Technik ausgehend liegt dem Gegenstand der vorliegenden Erfindung die Aufgabenstellung zugrunde, die in die Teilnehmerleitungen einzuspeisende Energie und die Verlustleistung an einem die Speisespannung für die Telekommunikationsendgeräte bereitstellenden Transistorschalter zu reduzieren, so dass auf Kühlmaßnahmen verzichtet und daher durch die Verwendung von Standardbauelementen der Aufwand und die Kosten zur dezentralen Stromversorgung in Tetekommunikationsantagen erheblich gesenkt werden können.

Diese Aufgabe wird erfindungsgemäß durch die Merkmale des Anspruchs 1 gelöst.

Die erfindungsgemäße Schaltungsanordnung ermöglicht durch eine Dezentralisierung der Teilnehmerspeiseschaltungen eine Verteilung der Speiseverlustleistung und durch das Erkennen sowohl eines reduzierten Speisestroms bzw. Fühlerstroms als auch eines erhöhten Speisestroms beispielsweise infolge eines Kurzschlusses der Anschlussleitungen eine Reduzierung der die Teilnehmerleitungen einzuspeisenden Energie und der Verlustleistung an dem die Speisespannung bereitstellenden Transistorschalter, so dass vollständig oder weitestgehend auf Kühlmaßnahmen verzichtet werden kann. Dadurch sind die Voraussetzungen für die Verwendung von Standardbauelementen gegeben, mit denen der Aufwand und die Kosten zur Stromversorgung in Telekommunikationsanlagen erheblich gesenkt werden können. Ein weiterer Vorteil der erfindungsgemäßen Schaltungsanordnung besteht darin, dem Endgerät bei Bedarf im Ruhezustand weniger Energie zuzuführen.

Vorteilhafte Ausführungen des Fühlerstromabschalters, der Stromsensorschaltung sowie der Überstrombegrenzung und der Kompensation übertragungstechnischer Einflüsse sind Gegenstand der Unteransprüche.

Die Erfindung wird nachfolgend anhand des Schaltungsbildes näher erläutert.

Die Stromversorgungseinrichtung besteht aus einer Steuerung MC, z. B. einem Mikrorechner, sowie für jeden Port aus einem Stromsensor, einem Fühlerstromschalter und einem Speisespannungsschalter. In der dargestellten Schaltungsanordnung ist als Teilnehmerschnittstelle TS eine Zweidrahtwiderstandsspeisung mit einem Signalbaustein U gezeigt. Die Stromversorgung ist jedoch ebenso für die Speisung analoger und/oder digitaler Endgeräte über Zweidraht- und Vierdraht-Schnittstellen einsetzbar.

Als zentraler Speisespannungsschalter dient ein Schalttransistor T1. Der Schalttransistor T1 wird über einen Steuertransistor T7 von einem von der Steuerung MC abgegebenen ersten Ausgangssignal B1...BN je nach Bedarf ein- oder ausgeschaltet. Im eingeschalteten Zustand des Schalttransistors T1 bilden in Reihe zur Kollektor-Emitter-Strecke des Schalttransistors T1 geschaltete Widerstände R 1 und R2 zusammen mit einem Transistor T3 und dem Schalttransistor T1 eine Fühlerstromquelle, die bei nicht belegten Anschlussleitungen a, b den Fluss eines reduzierten Speisestroms (Fühlerstrom) in den Anschlussleitungen a, b erzeugt. Der reduzierte Speisestrom schaltet einen Transistor T4 einer aus dem Transistor T4 und einem mit der Steuerung MC verbundenen, als Pegelwandler dienenden Transistor T5 bestehenden Stromsensorschaltung leitend. Dieser Stromfluss des reduzierten Speisestroms oder Fühlerstroms wird der Steuerung MC über den Signaleingang C1 mitgeteilt.

Das Umschalten des Fühlerstroms auf die Größe des vom angeschlossenen Endgerät bei belegten Anschlussleitungen a, b benötigten Speisestroms wird von der Steuerung MC über einen Transistor T6 vorgenommen. Der Transistor T6 steuert den nachgeordneten Transistor T2, mit dem er einen Fühlerstromabschalter bildet, leitend, so dass der parallel zur Kollektor-Emitter-Strecke des Transistors T2 geschaltete Widerstand R1 überbrückt wird. In dieser Betriebsart arbeiten der Widerstand R2 und der Transistor T3 als Überstrombegrenzer zum Schutz des Schalttransistors T1.

Der an den Anschlussleitungen a, b benötigte Speisestrom wird mittels der in Reihe geschalteten Widerstände R2 und R3, der Speisewiderstände der Teilnehmerschnittstelle TS sowie des Lastwiderstandes des Endgerätes an den Anschlussleitungen a, b eingestellt. Überschreitet der Speisestrom die durch die in Reihe geschalteten Widerstände R2 und R3 bestimmte Schwelle von beispielsweise ca. 0,6V an der Basis-Emitter-Strecke des Transistors T4, so wird der Transistor T4 aktiv geschaltet, der über den als Pegelwandler dienenden Transistor T5 dies der Steuerung MC signalisiert.

Durch eine Doppelfunktion der oben beschriebenen Stromsensorschaltung mit einem zusätzlichen Port an der Steuerung MC kann also - durch Dimensionierung von zwei unterschiedlichen Ansprechschwellen - sowohl eine Erkennung des Fühlerstroms oder reduzierten Speisestroms als auch eine Erkennung von erhöhtem Schleifen- oder Speisestrom (z.B. bei Kurzschluss der Anschlussleitungen a, b) realisiert werden. In letzterem Fall kann dann beispielsweise der Schalttransistor T1 ausgeschaltet werden.

Ein an den Kollektor des Schalttransistors T1 und Massepotential angeschlossener Kondensator C verhindert übertragungstechnische Rückwirkungen der Stromversorgungseinrichtung auf die Teilnehmerschnittstelle TS. Über die Steuerung MC lassen sich über die Signalausgänge A2...AN, B2..BN die Transistorschalter mehrerer Anschlussleitungen steuern, wobei für jede Anschlussleitung ein Schalter für die Speisespannung, ein Stromsensor und bei Bedarf ein Fühlerstromschalter vorgesehen sind.

Die Schaltungsanordnung kann bei Bedarf auch symmetrisch ausgeführt werden.

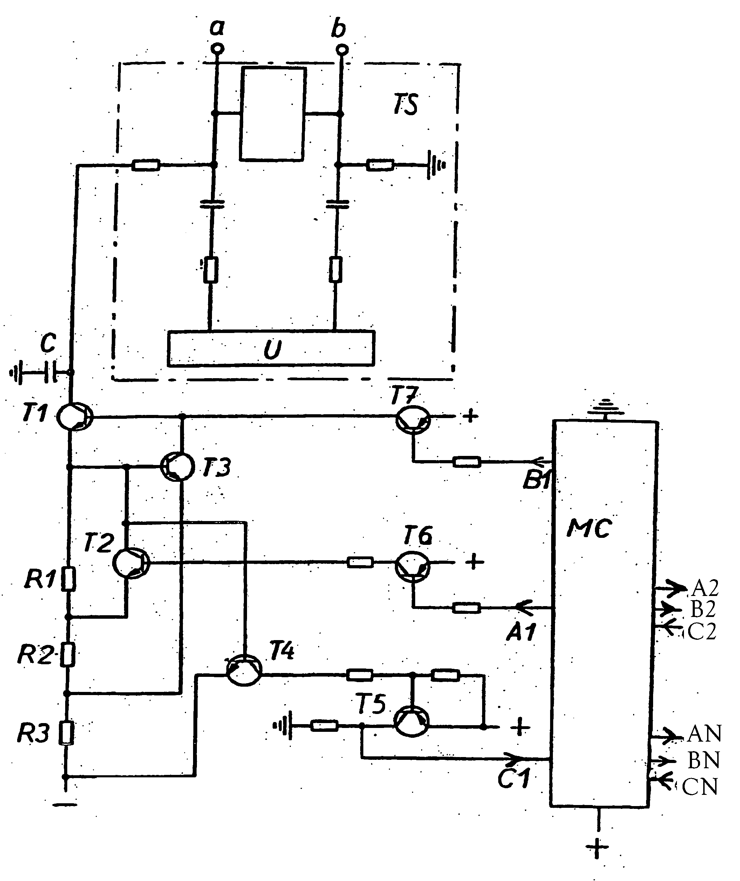

## Patentansprüche

1. Schaltungsanordnung zur dezentralen Stromversorgung in Telekommunikationsanlagen zum Speisen analog und/oder digital gesteuerter Endgeräte über eine Teilnehmerschnittstelle (TS) mit einer über mehrere Signaleingänge (C1 ... CN) und mehrere Signalausgänge (A1 ... AN, B1 ... BN)- mit den eine Anschlussleitung (a, b) aufweisenden Engeräten verbundenen Steuerung (MC), die derart ausgebildet ist, dass für jede Anschlussleitung (a, b) eines Endgerätes
- über einen ersten Signalausgang (B1 ... BN) ein Transistorschalter (T1, T7) für die Speisespannung der Endgeräte betätigt wird, der einen Schalttransistor (T1) enthält, in Reihe zu dessen Kollektor-Emitter-Strecke ein erster und zweiter Widerstand (R1, R2) geschaltet sind, die in Verbindung mit dem Schalttransistor (T1) und einem Fühlertransistor (T3) bei leitend geschaltetem Schalttransistor (T1) eine Fühlerstromquelle bilden, die bei nicht belegten Anschlussleitungen (a, b) einen reduzierten Speisestrom in den Anschlussleitungen (a, b) erzeugt,
- über den Signaleingang (C1 ... CN) mit einer Stromsensorschaltung (T4, T5) verbunden ist, die sowohl bei reduziertem Speisestrom als auch bei Überschreiten einer eingestellten Schwelle des Speisestroms ein Signal an die Steuerung (MC) abgibt und
- über einen zweiten Signalausgang (A1 ... AN) einen Fühlerstromabschalter (T2, T6) zum Umschalten des reduzierten Speisestroms auf die Größe des vom angeschlossenen Endgerätes bei belegten Anschlussleitungen (a, b) benötigten Speisestroms ansteuert.

2. Schaltungsanordnung nach Anspruch 1, **dadurch gekennzeichnet, dass** die Kollektor-Basis-Strecke des Fühlertransistors (T3) parallel zur Basis-Emitter-Strecke des Schalttransistors (T1) geschaltet ist und dass die Basis-Emitter-Strecke des Fühlertransistors (T3) parallel zu den in Reihe geschalteten ersten und zweiten Widerständen (R1, R2) angeordnet ist.

3. Schaltungsanordnung nach Anspruch 1 oder 2, **dadurch gekennzeichnet, dass** bei leitend geschaltetem Schalttransistor (T1) des Transistorschalters (T1, T7) für die Speisespannung und aktiviertem Fühlerstromabschalter (T2, T6) der zweite Widerstand (R2) in Verbindung mit dem Fühlertransistor (T3) als Überstrombegrenzer für die Stromversorgung dient.

4. Schaltungsanordnung nach einem der voranstehenden Ansprüche, **dadurch gekennzeichnet, dass** der Fühlerstromabschalter (T2, T6) einen parallel zum ersten Widerstand (R1) geschalteten zweiten Transistor (T2) enthält der derart ausgebildet ist, dass diese den ersten Widerstand (R1) überbrückt, wenn er von einem sechsten Transistor (T6) leitend gesteuert wird, dessen Basis mit einem der zweiten Signalausgänge (A 1...AN) der Steuerung (MC) verbunden ist.

5. Schaltungsanordnung nach einem der voranstehenden Ansprüche, **dadurch gekennzeichnet, dass** die Schwelle des Speisestroms zum Ansprechen eines Stromsensortransistors (T4) der Stromsensorschaltung (T4, T5) mit dem zweiten Widerstand (R2) und einem in Reihe zum ersten Widerstand (R1) und zweiten Widerstand (R2) geschalteten dritten Widerstand (R3) eingestellt wird, und dass die Basis-Emitter-Strecke des Stromsensortransistors (T 4) parallel zu den in Reihe geschalteten zweiten und dritten Widerständen (R2, R3) angeordnet und der Kollektor des Stromsensortransistors (T4) mit der Basis eines als Pegelwandler dienenden fünften Transistors (T5) verbunden ist, dessen Kollektor mit dem Signaleingang (C1...CN) der Steuerung (MC) verbunden ist.

6. Schaltungsanordnung nach einem der voranstehenden Ansprüche, **dadurch gekennzeichnet, dass** ein Kondensators (C) derart ausgebildet ist, dass dieser am Transistorschalter (T1, T7) für die Speisespannung übertragungstechnische Einflüsse der Schaltungsanordnung kompensiert.

## Claims

1. Circuit arrangement for locally supplying power in telecommunication installations for the purpose of powering analogue-controlled and/or digitally controlled terminals via a user-network interface (TS) with a controller (MC) which is connected via a plurality of signal inputs (C1 ... CN) and a plurality of signal outputs (A1 ... AN, B1 ... BN) to the terminals which have a connecting line (a, b) and which is designed such that for each connecting line (a, b) of a terminal
- a first signal output (B1 ... BN) is used to operate a transistor switch (T1, T7) for the supply voltage for the terminals, which transistor switch contains a switching transistor (T1) whose collector-emitter path has a first and a second resistor (R1, R2) connected in series with it which, in combination with the switching transistor (T1) and a sensing transistor (T3), form a sensing current source when the switching transistor (T1) is on, said sensing current source producing a reduced supply current in the connecting lines (a, b) when the connecting lines (a, b) are not in use,
- the signal input (C1 ... CN) connects it to a current sensor circuit (T4, T5) which outputs a signal to the controller (MC) both when the supply current is reduced and when a threshold which has been set for the supply current is exceeded, and
- it uses a second signal output (A1 ... AN) to actuate a sensing current disconnector (T2, T6) for changing over the reduced supply current to the magnitude of the supply current required by the connected terminal when the connecting lines (a, b) are in use.

2. Circuit arrangement according to Claim 1, **characterized in that** the collector-base junction of the sensing transistor (T3) is connected in parallel with the base-emitter junction of the switching transistor (T1), and **in that** the base-emitter junction of the sensing transistor (T3) is arranged in parallel with the series-connected first and second resistors (R1, R2).

3. Circuit arrangement according to Claim 1 or 2, **characterized in that** when the switching transistor (T1) of the transistor switch (T1, T7) for the supply voltage is on and the sensing current disconnector (T2, T6) has been activated the second resistor (R2) in conjunction with the sensing transistor (T3) serves as an overcurrent limiter for the power supply.

4. Circuit arrangement according to one of the preceding claims, **characterized in that** the sensing current disconnector (T2, T6) contains a second transistor (T2) which is connected in parallel with the first resistor (R1) and which is designed such that it bridges the first resistor (R1) when it is turned on by a sixth transistor (T6), whose base is connected to one of the second signal outputs (A1 ... AN) of the controller (MC).

5. Circuit arrangement according to one of the preceding claims, **characterized in that** the threshold of the supply current for addressing a current sensor transistor (T4) in the current sensor circuit (T4, T5) is set with the second resistor (R2) and a third resistor (R3) connected in series with the first resistor (R1) and the second resistor (R2), and **in that** the base-emitter junction of the current sensor transistor (T4) is arranged in parallel with the series-connected second and third resistors (R2, R3), and the collector of the current sensor transistor (T4) is connected to the base of a fifth transistor (T5) which serves as a level converter and whose collector is connected to the signal input (C1 ... CN) of the controller (MC).

6. Circuit arrangement according to one of the preceding claims, **characterized in that** a capacitor (C) is designed such that it compensates for transmission-related influences of the circuit arrangement on the transistor switch (T1, T7) for the supply voltage.

## Revendications

1. Circuit pour l'alimentation décentralisée en courant électrique dans des installations de télécommunication pour alimenter des appareils terminaux à commande analogique et/ou numérique par l'intermédiaire d'une interface partielle (TS) avec une commande (MC) connectée par l'intermédiaire de plusieurs entrées de signaux (C1... CN) et plusieurs sorties de signaux (A1 ... AN, B1 ... BN) avec les appareils terminaux présentant une conduite de connexion (a, b), qui est configuré de telle sorte que pour chaque conduite de connexion (a, b) d'un appareil terminal,
- un contacteur à transistor (T1, T7), qui comprend un transistor de contacteur (T1), est actionné pour la tension d'alimentation des appareils terminaux par l'intermédiaire d'une première sortie de signaux (B1 ... BN), et dans lequel une première et une deuxième résistance (R1, R2) sont montées en série par rapport à son trajet collecteur-émetteur, et qui forment en liaison avec le transistor de contacteur (T1) et un transistor palpeur (T3) une source de courant palpeur avec un transistor contacteur (T1) monté de façon conductrice, source de courant palpeur qui, pour les conduites de connexion non occupées (a, b), produit un courant d'alimentation réduit dans les conduites de connexion (a, b),
- est connecté par l'intermédiaire d'une entrée de signaux (C1... CN) avec un circuit capteur de courant (T4, T5), qui aussi bien pour un courant d'alimentation réduit que pour un dépassement d'un seuil ajusté du courant d'alimentation émet un signal à destination de la commande (MC) et
- par l'intermédiaire d'une deuxième sortie de signaux (A1 ... AN) pilote un interrupteur de courant palpeur (T2, T6) pour transformer le courant d'alimentation réduit à la grandeur du courant d'alimentation nécessaire pour l'appareil terminal (a, b) connecté avec les liaisons de connexion occupées.

2. Circuit selon la revendication 1, **caractérisé en ce que** le trajet collecteur-base du transistor palpeur (T3) est monté parallèlement au trajet base-émetteur du transistor contacteur (T1), et **en ce que** le trajet base-émetteur du transistor palpeur (T3) est monté parallèlement aux première et seconde résistances (R1, R2) montées en série.

3. Circuit selon la revendication 1 ou 2, **caractérisé en ce qu'**avec le transistor contacteur monté de façon conductrice (T1) du contacteur à transistor (T1, T7) pour la tension d'alimentation et avec l'interrupteur de courant palpeur activé (T2, T6), la seconde résistance (R2), en liaison avec le transistor palpeur (T3), sert de limiteur de surintensité de courant pour l'alimentation de courant.

4. Circuit selon l'une des revendications précédentes, **caractérisé en ce que** l'interrupteur de courant palpeur (T2, T6) contient un second transistor (T2) monté parallèlement à la première résistance (R1), conçu de telle sorte que celui-ci shunte la première résistance (R1) lorsqu'il est commandé de façon conductrice par un sixième transistor (T6) dont la base est reliée à l'une des secondes sorties de signaux (A1 ... AN) de la commande (MC).

5. Circuit selon l'une des revendications précédentes, **caractérisé en ce que** le seuil du courant d'alimentation pour l'activation d'un transistor capteur de courant (T4) du circuit capteur de courant (T4, T5) est ajusté avec la deuxième résistance (R2) et une troisième résistance (R3) montée en série par rapport à la première résistance (R1) et à la deuxième résistance (R2), et **en ce que** le trajet base-émetteur du transistor capteur de courant (T4) est monté parallèlement aux deuxième et troisième résistances (R2, R3) montées en série et le collecteur du transistor capteur de courant (T4) est raccordé à la base d'un cinquième transistor (T5) servant de convertisseur de niveau, cinquième transistor dont le collecteur est raccordé à l'entrée de signaux (C1... CN) de la commande (MC).

6. Circuit selon l'une des revendications précédentes, **caractérisé en ce qu'**un condensateur (C) est conçu de telle sorte que celui-ci compense au niveau du contacteur transistor (T1, T7) les incidences de transmission technique de la tension d'alimentation du circuit.
